# EUROPÄISCHE PATENTSCHRIFT

(11) **EP 3 412 393 B1**
(45) Veröffentlichungstag und Bekanntmachung des Hinweises auf die Patenterteilung: **19.08.2020**
(21) Anmeldenummer: 18172850.2
(22) Anmeldetag: 17.05.2018
(51) Int. Cl.: B23F 21/00, B23F 23/06, B23F 19/10, B23Q 39/04

(54) **VORRICHTUNG UND VERFAHREN ZUM ANFASEN EINES INNENVERZAHNTEN WERKSTÜCKS**
DEVICE AND METHOD FOR CHAMFERING AN INTERNALLY COGGED WORKPIECE
DISPOSITIFS ET PROCÉDÉ DE CHANFREINAGE D'UNE PIÈCE À DENTURE INTÉRIEURE

(30) Priorität: 06.06.2017 DE 102017112416
(43) Veröffentlichungstag der Anmeldung: 12.12.2018
(73) Patentinhaber: Liebherr-Verzahntechnik GmbH, 87437 Kempten (DE)
(72) Erfinder: Weixler, Johannes, 87471 Durach (DE)
(74) Vertreter: Behr, Wolfgang

(56) Entgegenhaltungen:
- EP-A1- 3 012 056
- DE-A1- 19 515 043
- DE-A1-102013 015 240
- DE-B3-102015 012 190
- DE-C- 736 920
- US-A- 2 114 627
- US-A1- 2013 121 779

## Beschreibung

Die vorliegende Erfindung betrifft eine Vorrichtung gemäß dem Oberbegriff des Patentanspruchs 1 und ein Verfahren gemäß dem Oberbegriff des Patentanspruchs 13, zum Anfasen mindestens einer stirnseitigen Kante der Verzahnung eines innenverzahnten Werkstücks, mit mindestens einer drehbar gelagerten Werkstückaufnahme zur Aufnahme des Werkstücks und mit mindestens einer drehbar gelagerten Werkzeugaufnahme zur Aufnahme mindestens eines Anfasfräsers. Insbesondere kann es sich bei dem Anfasfräser um einen Chamfer-Cut-Fräser handeln.

Bei der Bearbeitung von Werkstücken zur Herstellung einer Verzahnung auf dem Werkstückrohling entstehen scharfkantige Materialüberstände an den bearbeiteten Werkstückkanten. Diese als Grate bezeichneten Überstände müssen durch Entgraten der Kanten der Verzahnung entfernt werden, da sie in den Folgeprozessen stören bzw. beim manuellen Teilhandling für den Maschinenbediener eine Verletzungsgefahr darstellen. Zusätzlich werden die Kanten der Verzahnung häufig noch mit speziellen Schutzanfasungen versehen.

Druckschrift US 2013/121779 A1 offenbart eine Vorrichtung gemäß dem Oberbegriff des Patentanspruchs 1 und ein Verfahren gemäß dem Oberbegriff des Patentanspruchs 13, zum Bearbeiten einer Zahnkante des Werkstücks, bei welchem die Werkzeugspindel, welche den Anfasfräser aufnimmt, an einem Roboterarm angeordnet ist.

EP 3 012 056 A1 zeigt ein Verfahren und eine Vorrichtung zum Anfasen und Entgraten verzahnter, vorzugsweise großvolumiger, Werkstücke mit einer Entgratvorrichtung die auf oder an dem Bearbeitungskopf einer Verzahnmaschine angeordnet ist und die zumindest teilweise die Maschinenachsen der Verzahnmaschine nutzt, um eine Verzahnung entlang einer Zahnkontur anzufasen und zu entgraten.

Druckschriften US 2,114,627 A zeigt eine Verzahnmaschine.

Das Anfasen der Werkstücke erfolgt üblicherweise durch speziell angepasste Entgrat-Werkzeuge im Anschluss an die Herstellung der Verzahnung auf dem Werkstückrohling. Für diesen Anfasprozess gibt es mehrere Verfahren nach dem Stand der Technik. In der Serienfertigung werden vor allem die Verfahren Drückentgraten gemäß der DE 8328237 U sowie Anfasfräsentgraten gemäß der DE 20320294 U sowie der DE 202007016740 U verwendet.

Die DE 20320294 U zeigt dabei das Anfasfräsentgraten mit einem sogenannten Chamfer-Cut-Fräser. Ein solcher Chamfer-Cut-Fräser ist ein scheibenförmiges Entgratwerkzeug 11, welches am Umfang Schneidzähne 12 und Spannuten aufweist, bevorzugt mit jeweils gleichem Umfangsabstand. Die Schneidzähne haben einen in Umfangsrichtung schraubenlinienförmigen Verlauf. Der Chamfer-Cut-Fräser ist mehrgängig, wobei pro Gang ein Zahn vorgesehen ist. Die an der in Drehrichtung vorderen Seite der Zähne ausgebildeten Schneidkanten liegen jedoch auf einem gemeinsamen Flugkreis.

Die oben genannten Anfas-Verfahren werden üblicherweise zum Anfasen von Werkstücken mit einer Außenverzahnung eingesetzt, beispielsweise indem das Entgrat-Werkzeug zusammen mit dem Fräswerkzeug auf dem gleichen Werkzeugdorn aufgespannt und nach dem Fräsvorgang mit den Kanten der Verzahnung in Eingriff gebracht wird.

Aus der DE 10 2013 015 240 A1 ist es bereits bekannt, eine Anfas-Fräs-Station einzusetzen, bei welcher als einzige Werkzeuge in der Werkzeugspindel Anfasfräser, insbesondere Chamfer-Cut-Fräser, eingesetzt werden. Weiterhin ist dort angegeben, dass die dort gezeigte Vorrichtung zum Anfasen von Innenverzahnungen auch innerhalb eines innenverzahnten Werkstücks angeordnet werden kann. Dabei soll die Vorrichtung bei größeren Innenverzahnungen innerhalb des verzahnten Werkstückes auf einer feststehenden Konsole im Zentrum des Maschinentisches oder einem Support über dem Maschinentisch angeordnet sein und so der Anfasbearbeitung von Innenverzahnungen dienen. Bei Innenverzahnungen mit kleinerem Innendurchmesser reicht der Bauraum für diese Ausführungsform aber nicht mehr aus.

Aufgabe der Erfindung ist es, eine verbesserte Vorrichtung und ein verbessertes Verfahren zum Anfasen der stirnseitigen Kanten der Verzahnung eines innenverzahnten Werkstücks zur Verfügung zu stellen.

Diese Aufgabe wird durch die Vorrichtungen und Verfahren gemäß den unabhängigen Ansprüchen 1 und 13 der vorliegenden Anmeldung gelöst. Bevorzugte Ausgestaltungen der vorliegenden Erfindung sind Gegenstand der Unteransprüche.

Die vorliegende Erfindung umfasst eine Vorrichtung zum Anfasen mindestens einer stirnseitigen Kante der Verzahnung eines innenverzahnten Werkstücks, wobei die Vorrichtung mindestens eine drehbar gelagerte Werkstückaufnahme zur Aufnahme des Werkstücks und mindestens eine drehbar gelagerte Werkzeugaufnahme zur Aufnahme eines Anfasfräsers, insbesondere eines Chamfer-Cut-Fräsers, aufweist. Die Werkzeugaufnahme ist oder wird neben einem in der Werkstückaufnahme aufgenommenen Werkstück angeordnet, wobei ein in der Werkzeugaufnahme aufgenommener Anfasfräser mittels eines Werkzeugdorns in Bereich der durch die Innenverzahnung gebildeten Mittenöffnung des Werkstücks angeordnet wird, um mit einer Kante der Innenverzahnung auf der Oberseite und/oder Unterseite des Werkstücks in Eingriff gebracht zu werden.

Die Erfinder der vorliegenden Erfindung haben erkannt, dass es zum Anfasen einer Innenverzahnung nicht notwendig ist, die gesamte Vorrichtung, mit welcher das Anfasen erfolgt, innerhalb der durch die Innenverzahnung gebildeten Mittenöffnung anzuordnen. Weiterhin haben die Erfinder der vorliegenden Erfindung erkannt, dass es noch nicht einmal notwendig ist, die Werkzeugaufnahme in diesem Bereich anzuordnen.

Vielmehr kann erfindungsgemäß die Werkzeugaufnahme neben dem Werkstück angeordnet werden, und lediglich der Anfasfräser mittels eines Werkzeugdorns im Innenbereich des Werkstücks angeordnet werden. Hierdurch ist es möglich, für die erfindungsgemäße Vorrichtung einen konventionell aufgebauten Fräskopf mit nur geringfügigen konstruktiven Änderungen einzusetzen. Da die Zähne des im Bereich der Mittenöffnung angeordneten Anfasfräsers über den Radius des Werkzeugdorns hinausragen, können diese in die Mittenbohrung des Werkstücks eintauchen, um die Kanten der Verzahnung zu bearbeiten, während der Werkzeugdorn oberhalb oder unterhalb des Werkstücks verläuft.

Bevorzugt verläuft der Werkzeugdorn beim Anfasen einer Kante der Verzahnung ausgehend von der Werkzeugaufnahme an der Oberseite und/oder Unterseite des innenverzahnten Ringbereichs des Werkstücks vorbei von einem Außenbereich des Werkstücks zum Innenbereich des Werkstücks.

Die vorliegende Erfindung erfordert hierbei lediglich einen relativ langen Werkzeugdorn, so dass sich dieser über den innenverzahnten Ringbereich des Werkstücks hinweg erstreckt, um den Anfasfräser im Innenbereich des Werkstücks anzuordnen.

Bevorzugt beträgt die Länge des Werkzeugdorns von der Werkzeugaufnahme bis zu mindestens einem auf dem Werkzeugdorn angeordneten Anfasfräser mindestens 10% des Innenradius der Innenverzahnung des Werkstücks, bevorzugt mehr als 20% und mindestens 30%. In einer besonders bevorzugten Ausgestaltung beträgt die Länge mehr als 40%. Soweit mehrere Anfasfräser auf dem Werkzeugdorn vorgesehen sind, gelten diese Maßangaben bevorzugt für die Länge des Dorns zwischen der Werkzeugaufnahme und dem ersten, der Werkzeugaufnahme zugewandten Anfasfräser. Weiter bevorzugt beträgt auch die Länge des Dorns zwischen zwei auf dem Dorn angeordneten Anfasfräsern mindestens 10% des Innenradius der Innenverzahnung des Werkstücks, bevorzugt mehr als 20%, weiter bevorzugt mindestens 30% oder 40%.

Die Werkzeugaufnahme kann in einer möglichen Ausführungsform an einem neben oder über der Werkstückaufnahme angeordneten Bearbeitungskopf angeordnet sein und über diesen relativ zur Werkstückaufnahme bewegt werden können. Besonders bevorzugt ist der Bearbeitungskopf an einen Maschinenständer neben oder über der Werkstückaufnahme angeordnet. Der Maschinenständer kann auf einem Maschinenbett angeordnet sein, welches auch die Werkstückaufnahme trägt.

Bevorzugt weist der Bearbeitungskopf eine Maschinenachse zur Bewegung der Werkzeugaufnahme in Achsrichtung der Werkstückaufnahme und/oder eine Maschinenachse zum Verfahren der Werkzeugaufnahme in eine Richtung senkrecht zur Drehachse der Werkstückaufnahme und/oder zu der Drehachse der Werkzeugaufnahme.

Weiterhin kann der Bearbeitungskopf eine Schwenkachse zum Schwenken der Werkzeugaufnahme um eine zur Drehachse der Werkzeugaufnahme und/oder zur Drehachse der Werkstückaufnahme senkrechte Schwenkachse und/oder eine Maschinenachse zum Vershiften der Werkzeugaufnahme in Richtung ihrer Drehachse aufweisen.

Bevorzugt ist der am Werkzeugdorn angeordnete Anfasfräser von einer Unterseite und/oder Oberseite aus zugänglich.

Spricht die vorliegende Anmeldung von einer Oberseite bzw. einer Unterseite des Werkstückes, bzw. einer Anordnung von Komponenten oberhalb, unterhalb oder neben dem Werkstück, so bedeutet dies nicht, dass die Werkstückaufnahme eine vertikale Drehachse aufweisen muss oder dass die Oberseite in vertikaler Richtung oberhalb der Unterseite angeordnet ist, oder dass eine entsprechende Anordnung der Komponenten tatsächlich in vertikaler Richtung über oder unter dem Werkstück oder in horizontaler Richtung neben dem Werkstück erfolgt.

Vielmehr handelt es sich bei diesen Begriffen lediglich um die Angabe von relativen Anordnungen in einer durch die Werkstückdrehachse vorgegebenen Richtung, durch welche die Oberseite und die Unterseite des Werkstücks definiert ist. Welche Seite dabei als Oberseite des Werkstücks und welche als Unterseite angesehen wird, ist dabei im Rahmen der vorliegenden Erfindung unerheblich.

Je nach Maschinenkonzept wäre bspw. auch eine Anordnung denkbar, bei der die Werkstückachse während der Bearbeitung horizontal angeordnet ist, was wiederum eine horizontale Ausrichtung der erfindungsgemäßen Vorrichtung erfordern würde.

Alternativ oder zusätzlich kann die Werkzeugaufnahme über einen Bearbeitungskopf an einem Maschinenständer angeordnet sein, wobei sich der Bearbeitungskopf bevorzugt senkrecht zur Drehachse der Werkstückaufnahme und/oder zur Drehachse der Werkzeugaufnahme den dem Maschinenständer weg erstreckt. Insbesondere erstreckt sich hierdurch die Drehachse der Werkzeugaufnahme in einem gewissen Abstand zu dem Maschinenständer.

Weiterhin alternativ oder zusätzlich kann die Werkzeugaufnahme so an einem Bearbeitungskopf angeordnet sein, dass sie sich parallel zur der der Werkstückaufnahme zugewandten Vorderseite des Maschinenständers erstreckt.

Insbesondere kann die erfindungsgemäße Vorrichtung so aufgebaut sein, dass sich der Ringbereich des innenverzahnten Werkstücks, welcher durch den Anfasfräser angefast wird, in einem Bereich zwischen dem Maschinenständer und der Drehachse der Werkzeugaufnahme unterhalb oder oberhalb des Werkzeugdorns erstreckt.

In einer bevorzugten Ausgestaltung der vorliegenden Erfindung weist die erfindungsgemäße Vorrichtung einen Sensor zum Einfädeln und/oder Einmitten des Anfasfräsers in die Innenverzahnung des Werkstücks auf.

Ein solcher Sensor ist insbesondere dann notwendig, wenn die erfindungsgemäße Vorrichtung als stand-alone Anordnung ausgeführt ist bzw. das Werkstück, dessen Kanten angefast werden sollen, zuvor bei der Herstellung der Verzahnung in einer anderen Werkstückaufnahme angeordnet war und bspw. über einen Werkstückwechsler zur Werkstückaufnahme der erfindungsgemäßen Vorrichtung transportiert wird, da in diesem Fall die Position der Verzahnung relativ zur Vorrichtung nicht bekannt ist.

Bevorzugt handelt es sich um einen berührungslosen Sensor. Beispielsweise kann ein induktiver Sensor und/oder ein optischer Sensor eingesetzt werden.

Der Sensor zum Einfädeln und/oder Einmitten des Anfasfräsers wird vorzugsweise an einem separaten Arm geordnet, über welchen er in die Innenverzahnung hinein verfahren wird. Bevorzugt ist der Arm für den Sensor zusammen mit der Werkzeugaufnahme an einem Bearbeitungskopf der Vorrichtung angeordnet und/oder kann über die selben Maschinenachsen verfahren werden. Weiterhin wäre beispielsweise beim Einsatz optischer Sensoren auch eine Anordnung des Sensors außerhalb der Verzahnung denkbar.

In einer möglichen Ausgestaltung der vorliegenden Erfindung handelt es sich bei der Werkstückaufnahme um eine erste drehbar gelagerte Werkstückaufnahme zur Aufnahme des Werkstücks. Dabei ist vorgesehen, dass die Vorrichtung eine zweite drehbar gelagerte Werkstückaufnahme zur Aufnahme des Werkstücks aufweist. Dabei ist die Kante der Verzahnung auf einer ersten Stirnseite des Werkzeugs anfasbearbeitbar, während das Werkstück in der ersten Werkstückaufnahme aufgenommen ist, und die Kante auf der zweiten Stirnseite des Werkstücks anfasbearbeitbar, während das Werkstück in der zweiten Werkstückaufnahme aufgenommen ist.

Die Erfinder der vorliegenden Erfindung haben erkannt, dass die Anfasbearbeitung der Kanten der Verzahnung sowohl auf der Oberseite als auch auf der Unterseite eines in einer Werkstückaufnahme aufgenommen, innenverzahnten Werkstücks besonders kompliziert ist, da insbesondere die Kante der Verzahnung auf der der Werkzeugaufnahme zugewandten Seite des Werkstückes äußerst schlecht zugänglich ist.

Dieses Problem wird nun dadurch gelöst, dass zwei Werkstückaufnahmen vorgesehen sind, so dass jeweils die Kante anfasbearbeitet werden kann, welche auf der der Werkstückaufnahme abgewandten Seite angeordnet ist und daher leicht zugänglich ist.

Bevorzugt weist die erfindungsgemäße Vorrichtung einen über Maschinenachsen verfahrbaren Bearbeitungskopf auf, welcher zur Anfasbearbeitung der Kanten der Verzahnung sowohl auf der ersten, als auf der zweiten Stirnseite dient. Es kann daher der gleiche Bearbeitungskopf eingesetzt werden, um sowohl ein Werkstück, welches in der ersten Werkstückaufnahme aufgenommen ist, als auch ein Werkstück, welches in der zweiten Werkstückaufnahme aufgenommen ist, zu bearbeiten. Insbesondere können dabei die gleichen Maschinenachsen eingesetzt werden, um die Anfasbearbeitung durchzuführen.

Bevorzugt ist die Werkzeugaufnahme der erfindungsgemäßen Vorrichtung an dem Bearbeitungskopf angeordnet und kann durch dessen Maschinenachsen verfahren werden.

Alternativ oder zusätzlich kann die Anfasbearbeitung der Kanten der Verzahnung auf der ersten und der zweiten Stirnseite über denselben Anfasfräser oder über mehrere in derselben Werkzeugaufnahme aufgenommene Anfasfräser erfolgen. Besonders bevorzugt erfolgt die Anfasbearbeitung der Kanten der Verzahnung auf der ersten und zweiten Stirnseite des Werkstücks dabei über zwei separate, auf dem gleichen Werkzeugdorn aufgespannte Anfasfräser.

Bevorzugt weist die erfindungsgemäße Vorrichtung eine Vorrichtung zum Wechseln des Werkstücks von der ersten Werkstückaufnahme zur zweiten Werkstückaufnahme und/oder von der zweiten Werkstückaufnahme zur ersten Werkstückaufnahme auf. Insbesondere kann daher das Werkstück, nachdem die Kanten der Verzahnung auf einer ersten Stirnseite bearbeitet wurden, während dieses in der ersten Werkstückaufnahme aufgenommen war, zur zweiten Werkstückaufnahme gewechselt werden, um die Kanten der Verzahnung auf der zweiten Stirnseite Anfaszubearbeiten.

Bevorzugt erfolgt der Wechsel so, dass die zweite Stirnseite des Werkstücks der ersten Werkstückaufnahme zugewandt ist, während das Werkstück in dieser aufgenommen ist, und die erste Stirnseite des Werkstücks der zweiten Werkstückaufnahme zugewandt ist, während das Werkstück in dieser angeordnet ist, so dass die jeweils anderen Stirnseiten zugänglich sind und bearbeitet werden können.

In einer möglichen Ausführungsform der vorliegenden Erfindung kann die Vorrichtung zum Wechseln des Werkstücks dadurch zur Verfügung gestellt werden, dass eine der beiden Werkstückaufnahmen so verfahrbar ist, dass sie ein in der anderen Werkstückaufnahme aufgenommenes Werkstück greifen kann.

Alternativ oder zusätzlich kann ein Werkstückwechsler zum Verfahren des Werkstücks von der einen Werkstückaufnahme zu der anderen Werkstückaufnahme vorgesehen sein.

Bevorzugt wird die Drehposition des Werkstücks bei der Werkstückübergabe elektronisch von der ersten Werkstückaufnahme auf die zweite Werkstückaufnahme übertragen, so dass nach der Werkstückübergabe die Drehposition wieder bekannt ist. Insbesondere kann so ein erneuter Einfädelprozess nicht mehr erforderlich sein, um den Anfasfräser zum Anfasen der Verzahnung auf der zweiten Stirnseite des Werkstücks korrekt zu positionieren.

In einer bevorzugten Ausgestaltung der vorliegenden Erfindung sind die beiden Werkstückaufnahmen auf zwei gegenüberliegenden Seiten eines Arbeitsbereiches angeordnet oder anordenbar. Bevorzugt ist das Werkstück je nachdem, in welcher Werkstückaufnahme es aufgenommen ist, mit seiner ersten oder zweiten Stirnseite dem Arbeitsbereich zugewandt. Bevorzugt sind oder werden der oder die Anfasfräser in dem Arbeitsbereich angeordnet, um die jeweiligen Kanten der Verzahnung auf den dem Arbeitsbereich zugewandten Stirnseiten zu bearbeiten.

In einer möglichen Ausführungsform der vorliegenden Erfindung weisen die beiden Werkstückaufnahmen parallele Drehachsen auf. Besonders bevorzugt sind die beiden Werkstückaufnahme koaxial angeordnet. Besonders bevorzugt ist in diesem Fall die eine Werkstückaufnahme in Richtung ihrer Drehachse zur anderen Werkstückaufnahme verfahrbar, um das Werkstück zu übernehmen.

Besonders bevorzugt ist die Werkzeugaufnahme neben den beiden Werkstückaufnahmen angeordnet und/oder anordenbar, wobei mindestens ein Anfasfräser mittels eines Werkzeugdorns oberhalb der durch die Innenverzahnung gebildeten Mittenöffnung des Werkstücks anordenbar ist, wenn dieses in der ersten Werkstückaufnahme angeordnet ist, um mit einer Kante der Verzahnung auf der Oberseite des Werkstücks in Eingriff gebracht zu werden. Weiterhin kann ein Anfasfräser mittels eines Werkzeugdorns unterhalb der durch die Innenverzahnung gebildeten Mittenöffnung anordenbar sein, wenn dieses in der zweiten Werkstückaufnahme angeordnet ist, um mit einer Kante der Verzahnung auf der Unterseite des Werkstücks in Eingriff gebracht zu werden. Bevorzugt wird zur Anfasbearbeitung der Kanten der Verzahnung auf Oberseite und Unterseite die gleiche Werkzeugaufnahme eingesetzt.

In einer ersten Alternative der vorliegenden Erfindung werden zum Bearbeiten der Kanten der Verzahnung auf der Oberseite und Unterseite separate, bevorzugt auf dem gleichen Werkzeugdorn angeordnete Anfasfräser eingesetzt.

Besonders bevorzugt wird zum Bearbeiten der Kanten der Verzahnung auf der Oberseite und Unterseite mit entgegengesetzten Drehrichtungen der Werkzeugaufnahme gearbeitet, um die gleiche Schnittrichtung zwischen dem Werkzeug und dem Werkstück beim Anfasen der Kanten auf der Oberseite und der Unterseite zu erreichen. Insbesondere kann die Drehrichtung so gewählt werden, dass sowohl beim Anfasen der Kanten der Verzahnung auf der Oberseite, als auch beim Anfasen der Kanten der Verzahnung auf der Unterseite eine Bearbeitung von den Stirnseiten in die Verzahnung hinein erfolgt, oder die Drehrichtung wird so gewählt, dass jeweils eine Bearbeitung der Kanten der Verzahnung mit einer Schnittrichtung aus der Verzahnung in Richtung auf die Stirnseiten erfolgt. Dies hat den Vorteil, dass beim Anfasen verbleibende Grate entweder nur auf den Stirnseiten, oder nur innerhalb der Verzahnung verbleiben. Die Drehrichtung der jeweiligen Werkstückaufnahme wird entsprechend der Drehrichtung des Anfasfräsers angepasst.

Alternativ kann zum Bearbeitung der Kanten der Verzahnung auf Oberseite und Unterseite derselbe Anfasfräser eingesetzt werden. In einer ersten Alternative kann dieser im gleichen radialen Bereich des Werkstücks mit der Kante der Verzahnung auf Ober- und Unterseite in Eingriff gebracht werden. Dies hat jedoch den Nachteil, dass jeweils unterschiedliche Schnittrichtungen bei der Anfasbearbeitung der Kanten der Verzahnung auf Ober- und Unterseite bestehen.

Bevorzugt wird der Anfasfräser daher mit einer bezüglich der Drehachse des Werkstücks ersten radialen Richtung mit einem Kantenbereich der Verzahnung auf einer ersten Seite des Werkstücks in Eingriff gebracht und nach dem Wechsel des Werkstücks in die zweite Werkstückaufnahme durch Verfahren der Werkzeugaufnahme in einer bezüglich der Drehachse des Werkstücks zweiten radialen Richtung mit einem radial gegenüberliegenden Kantenbereich der Verzahnung auf der zweiten Seite des Werkstücks in Eingriff gebracht. Dies hat den Vorteil, dass sich wiederrum die gleiche Schnittrichtung bezüglich des Werkstücks auf beiden Seiten ergibt. Hierbei muss beim Wechsel der Eingriffsstellen die Drehrichtung der Werkstückaufnahmen angepasst werden.

Bevorzugt sind der oder die auf einem Werkzeugdorn angeordneten Anfasfräser von zwei Seiten aus zugänglich, um jeweils mit einer Kante des Werkstücks in Eingriff gebracht werden zu können. Insbesondere sind sie sowohl von der Oberseite, als auch von der Unterseite aus zugänglich.

Die erfindungsgemäße Vorrichtung wird üblicherweise in der Serienfertigung und insbesondere der Großserienfertigung eingesetzt. Die Bearbeitung der Werkstücke und damit auch der Anfasprozess erfolgt in diesem Fall automatisiert durch die Steuerung der Vorrichtung.

Die erfindungsgemäße Vorrichtung weist eine Steuerung zur automatischen Ansteuerung der Maschinenachsen der Vorrichtung zum Anfasen der Kante der Verzahnung auf mindestens einer und bevorzugt auf beiden Stirnseiten eines Werkstücks auf.

Die Steuerung der Vorrichtung ist so programmiert, dass die erfindungsgemäße Vorrichtung die oben im Hinblick auf deren Funktionsweise und/oder Anwendung beschriebenen Schritte automatisch durchführt.

Die Steuerung weist insbesondere einen Mikroprozessor und einen Speicher auf, in welchem ein Steuerprogramm zur Ansteuerung der Vorrichtung abgespeichert ist, welches durch den Mikroprozessor abgearbeitet wird.

Die vorliegende Erfindung stellt zunächst eine Vorrichtung, wie sie oben näher beschrieben wurde, unter Schutz, welche zur Aufnahme eines Anfasfräsers und insbesondere eines Chamfer-Cut-Fräsers in der Werkzeugaufnahme geeignet ist.

Die vorliegende Erfindung umfasst jedoch ebenfalls eine Vorrichtung, wie sie oben beschrieben ist, bei welcher mindestens ein Anfasfräser in der Werkzeugaufnahme aufgenommen ist, bzw. bei welchem bei mehreren Werkzeugaufnahmen in diesen jeweils Anfasfräser aufgenommen sind. Insbesondere sind dabei in der Werkzeugaufnahme oder den Werkzeugaufnahmen Chamfer-Cut-Fräser aufgenommen.

Die vorliegende Erfindung betrifft weiterhin ein Verzahnbearbeitungszentrum mit einer Vorrichtung, wie sie oben beschrieben wurde, einer Verzahnmaschine und einem Werkstückwechsler. Bevorzugt handelt es sich bei der Verzahnmaschine um eine Maschine zur Bearbeitung von Innenverzahnungen, insbesondere eine Fräsmaschine oder eine Verzahnungsstoßmaschine oder um eine Wälzschälmaschine. Bevorzugt erfolgt die Verzahnbearbeitung und das Anfasen der Werkstücke in dem Verzahnbearbeitungszentrum taktzeit-parallel. Insbesondere werden durch die Verzahnmaschine verzahnte Werkstücke über den Werkstückwechsler zur Vorrichtung gemäß der vorliegenden Erfindung zum Anfasen weiter transportiert, um angefast zu werden, während auf der Verzahnmaschine bereits das nächste Werkstück verzahnt wird. Dabei ist auch ein Anfasen des Werkstücks zwischen einem Schruppschritt und einem Schlichtschritt denkbar, wofür das Werkstück bevorzugt von der Verzahnmaschine zu der erfindungsgemäßen Vorrichtung und wieder zurück verfahren wird.

Bevorzugt handelt es sich bei dem Werkstückwechsler um eine Ring-Automation, wobei weiterhin bevorzugt die erfindungsgemäße Vorrichtung zum Anfasen sowie die Verzahnmaschine an unterschiedlichen Winkelpositionen der Ring-Automation angeordnet sind.

Bevorzugt weisen die Verzahnmaschine und die erfindungsgemäße Vorrichtung separate Werkstückaufnahmen auf. Der Werkstückwechsler wechselt in diesem Fall ein Werkstück nach der Verzahnbearbeitung der Verzahnmaschine von der dortigen Werkstückaufnahme zur Werkstückaufnahme der erfindungsgemäßen Vorrichtung zum Anfasen.

In einer alternativen Ausgestaltung kann das Verzahnbearbeitungszentrum jedoch auch mehrere Werkstückaufnahmen aufweisen, in welchen die Werkstücke für die Verzahnbearbeitung und die Anfasbearbeitung verbleiben. In diesem Fall werden die Werkstückaufnahmen bevorzugt von der Verzahnmaschine zu der erfindungsgemäßen Vorrichtung bewegt und/oder umgekehrt.

Der Werkstückwechsler wird bevorzugt dazu eingesetzt, um Werkstücke von einer externen Transportstrecke oder anderen Bearbeitungsstationen auf die Werkstückaufnahme oder Werkstückaufnahmen aufzulegen und von diesen abzunehmen.

Gemäß einem weiteren Aspekt der vorliegenden Erfindung kann die erfindungsgemäße Vorrichtung auch als eine separate Maschine ausgeführt sein. Bevorzugt erhält diese verzahnte Werkstücke von einer Transportstrecke und/oder Automation, um diese Anfaszubearbeiten. Die entsprechend bearbeiteten Werkstücke werden dann bevorzugt wieder einer Transportstrecke und/oder Automation übergeben.

Die vorliegende Erfindung umfasst neben der erfindungsgemäßen Vorrichtung auch ein Verfahren, gemäß dem Patentanspruch 13, zum Anfasen mindestens einer stirnseitigen Kante der Verzahnung eines innenverzahnten Werkstücks durch einen in einer drehbar gelagerten Werkzeugaufnahme aufgenommenen Anfasfräser, insbesondere einen Chamfer-Cut-Fräser. In dem Verfahren wird die Werkzeugaufnahme neben einem in einer Werkstückaufnahme aufgenommenen Werkstück angeordnet und wird der in der Werkzeugaufnahme aufgenommene Anfasfräser über einen Werkzeugdorn im Bereich der durch die Innenverzahnung gebildeten Mittenöffnung angeordnet, um mit einer Kante der Verzahnung auf der Oberseite und/oder Unterseite des Werkstücks in Eingriff gebracht zu werden.

Bevorzugt erfolgt das erfindungsgemäße Verfahren so, wie dies bereits oben im Hinblick auf die Vorrichtung gemäß der vorliegenden Erfindung näher dargestellt wurde. Insbesondere kann das erfindungsgemäße Verfahren unter Verwendung einer solchen Vorrichtung durchgeführt werden.

Gemäß einer möglichen Ausgestaltung der vorliegenden Erfindung ist vorgesehen, dass die Kante der Verzahnung auf einer ersten Stirnseite des Werkstücks anfasbearbeitet wird, während das Werkstück in einer ersten Werkstückaufnahme aufgenommen ist, und die Kante der Verzahnung auf einer zweiten Stirnseite des Werkstücks anfasbearbeitet wird, während das Werkstück in einer zweiten Werkstückaufnahme aufgenommen ist.

Bevorzugt erfolgt auch dieses Verfahren so, wie oben bereits im Hinblick auf die erfindungsgemäße Vorrichtung näher dargestellt wurde. Besonders bevorzugt erfolgt das Verfahren unter Verwendung einer solchen Vorrichtung.

Die vorliegende Erfindung umfasst weiterhin die Verwendung eines Anfasfräsers, insbesondere die Verwendung eines Chamfer-Cut-Fräsers, zur Durchführung eines der erfindungsgemäßen Verfahren, wie sie oben dargestellt wurden.

Weiterhin umfasst die vorliegende Erfindung die Verwendung eines Anfasfräsers, insbesondere eines Chamfer-Cut-Fräsers, in einer der erfindungsgemäßen Vorrichtungen, wie sie oben beschrieben wurden.

Die erfindungsgemäßen Verfahren und Vorrichtungen werden bevorzugt zum Anfasen der Kanten von Stirnradverzahnungen eingesetzt.

Bei den erfindungsgemäßen Werkstücken handelt es sich bevorzugt um Zahnräder, insbesondere um Zahnräder mit einer Innenverzahnung. Solche Zahnräder mit einer Innenverzahnung weisen bevorzugt eine Ringform auf, wobei die Innenverzahnung an der inneren Ringfläche angeordnet ist.

Bevorzugt erfolgt das Anfasen gemäß der vorliegenden Erfindung über einen Chamfer-Cut-Fräser. Insbesondere kann der Chamfer-Cut-Fräser so ausgestaltet sein wie das Entgrat-Werkzeug, welches in der DE 10330474 A1 beschrieben ist. Weiterhin bevorzugt erfolgt das Anfasen mittels des Chamfer-Cut-Fräsers so, wie dies ebenfalls in der DE 10330474 A1 für den Entgratvorgang beschrieben ist.

Anders als in der DE 10330474 A1 gezeigt wird der Chamfer-Cut-Fräser jedoch im Rahmen der vorliegenden Erfindung bevorzugt nicht mit dem Werkzeug, welches zur Herstellung der Verzahnung eingesetzt wird, auf dem gleichen Werkzeugdorn aufgespannt, sondern in einer eigenen Werkzeugaufnahme, bevorzugt als einziges Werkzeug in einer eigenen Werkzeugaufnahme.

Die vorliegende Erfindung wird nun anhand von Ausführungsbeispielen sowie Zeichnungen näher beschrieben:
Dabei zeigen:
- Fig. 1:: ein Ausführungsbeispiel einer erfindungsgemäßen Vorrichtung zum Anfasen der Kanten der Verzahnung eines innenverzahnten Werkstücks, bei welcher beide Aspekte der vorliegenden Erfindung verwirklicht sind,
- Fig. 2:: das Anfasen der Kante der Verzahnung auf einer Oberseite des Werkstückes, während dieses in der ersten Werkstückaufnahme aufgenommen ist,
- Fig. 3:: den Wechsel des Werkstücks von der ersten Werkstückaufnahme zur zweiten Werkstückaufnahme,
- Fig. 4:: das Anfasen einer Kante der Verzahnung auf einer Unterseite des Werkstücks, während dieses in der zweiten Werkstückaufnahme aufgenommen ist,
- Fig. 5:: die in Fig. 4 gezeigte Bearbeitung in einer teilweisen Schnittansicht durch das Werkstück, und
- Fig. 6:: ein erfindungsgemäßes Verzahnzentrum mit einer erfindungsgemäßen Vorrichtung sowie einem Werkstückwechsler.

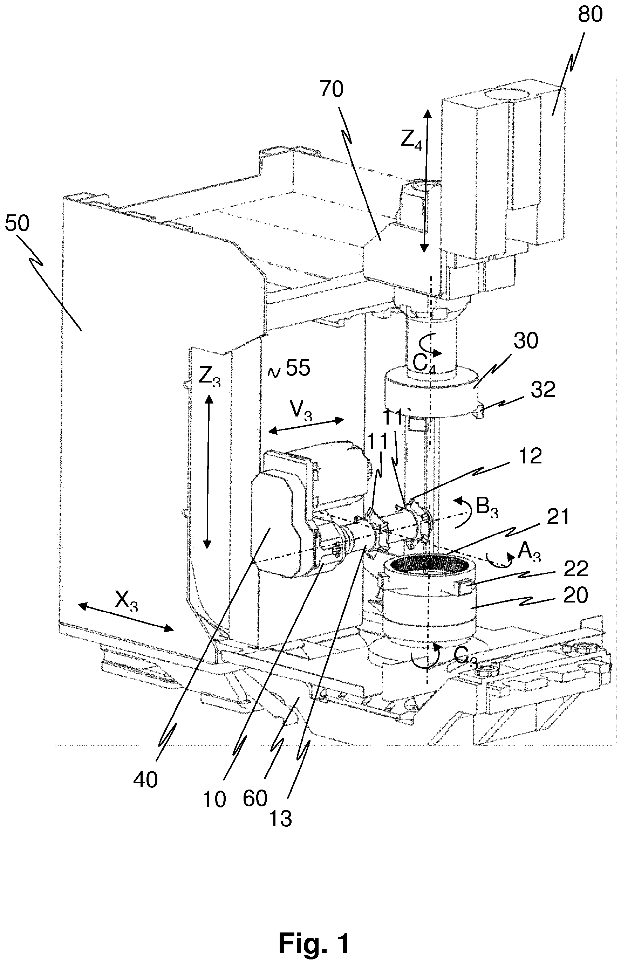

Das in Fig. 1 bis 5 beschriebene Ausführungsbeispiel einer erfindungsgemäßen Vorrichtung sowie das durch diese Vorrichtung durchgeführte Verfahren verwirklichen sowohl den ersten, als auch den zweiten Aspekt der vorliegenden Erfindung. Die in Bezug auf den ersten bzw. zweiten Aspekt beschriebenen Merkmale des Ausführungsbeispiels können jedoch auch jeweils gesondert und für sich genommen und ohne den jeweils anderen Aspekt verwirklicht werden.

In Fig. 1 ist eine erfindungsgemäße Vorrichtung zum Anfasen der Kanten der Verzahnung eines innenverzahnten Werkstückes 21 gezeigt. Die Vorrichtung weist eine Werkzeugaufnahme 10 auf, in welcher mindestens ein Anfasfräser 11, 11' über einen Werkzeugdorn 13 aufgenommen ist. Weiterhin ist eine Werkstückaufnahme 20 vorgesehen, über welche das Werkstück 21 aufgenommen wird, sodass die Kante der Verzahnung auf mindestens einer Stirnseite des Werkstücks 21 durch einen in der Werkzeugaufnahme 10 aufgenommenen Anfasfräser 11, 11' anfasbearbeitet werden kann. Hierzu wird bevorzugt der Anfasfräser mit der Kante in Eingriff gebracht und die Rotationsbewegung der Werkzeugaufnahme 10 mit der Rotationsbewegung der Werkstückaufnahme 20 so synchronisiert, dass der Anfasfräser die Kante der Verzahnung des Werkstücks bearbeitet.

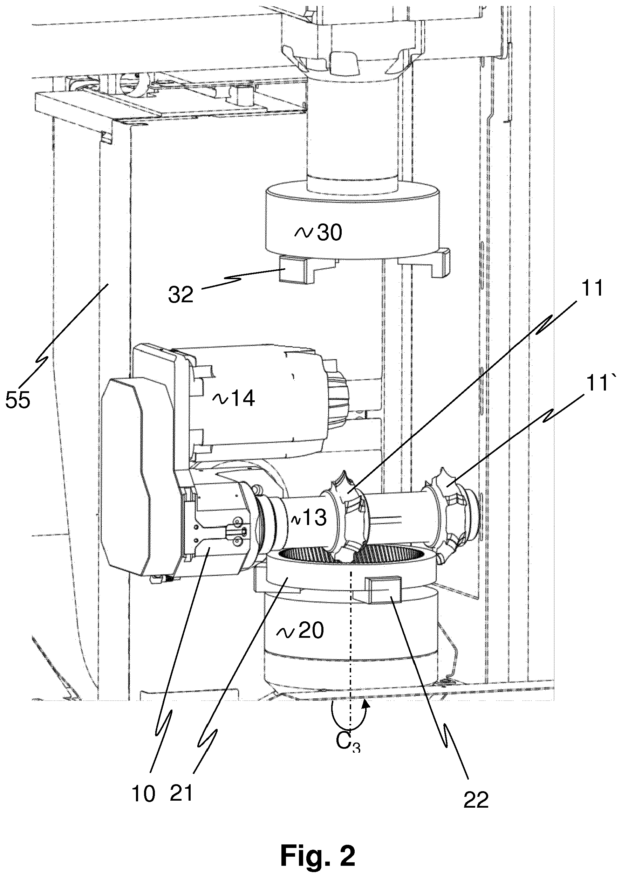

Gemäß dem ersten Aspekt der vorliegenden Erfindung ist die Werkzeugaufnahme 10 außerhalb des Werkstücks 21 angeordnet, der Anfasfräser 11 bzw. 11' zum Anfasen des Kantenbereichs jedoch mittels des Werkzeugdorns 13 im Bereich der Mittenöffnung des Werkstücks 21 angeordnet. Wie insbesondere aus Fig. 2 ersichtlich, erstreckt sich hierfür der Werkzeugdorn 13 ausgehend von der neben der Werkstückaufnahme 20 angeordneten Werkzeugaufnahme 10 über den ringförmigen verzahnten Bereich des Werkstücks hinweg in den Bereich der Mittenöffnung des Werkstücks, sodass der Anfasfräser in diesem Bereich angeordnet ist und von dort aus die Kante bearbeitet.

Bei dem in Fig. 2 gezeigten Ausführungsbeispiel ist der Anfasfräser 11 hierfür in einem Bereich oberhalb der Mittenbohrung angeordnet, die Werkzeugaufnahme in einem Bereich neben und leicht oberhalb der Werkstückaufnahme 20. Da die Zähne 12 des Anfasfräsers 11 über den Radius des Werkzeugdorns 13 hinausragen, können diese in die Mittenbohrung des Werkstücks 21 eintauchen, um die Kanten der Verzahnung zu bearbeiten.

Bei dem in Fig. 2 dargestellten Bearbeitungsvorgang ist das Werkstück 21 mit seiner Unterseite zur Werkstückaufnahme 20 gerichtet, während die Kante der Verzahnung auf der Oberseite durch den Anfasfräser 11 verzahnbearbeitet wird. Hierfür greift der Anfasfräser von oben in die Mittenöffnung des Werkstücks 21 ein. Der Werkzeugdorn 13 verläuft oberhalb der Oberseite des Werkstücks 21 über den ringförmigen Bereich des Werkstücks hinweg.

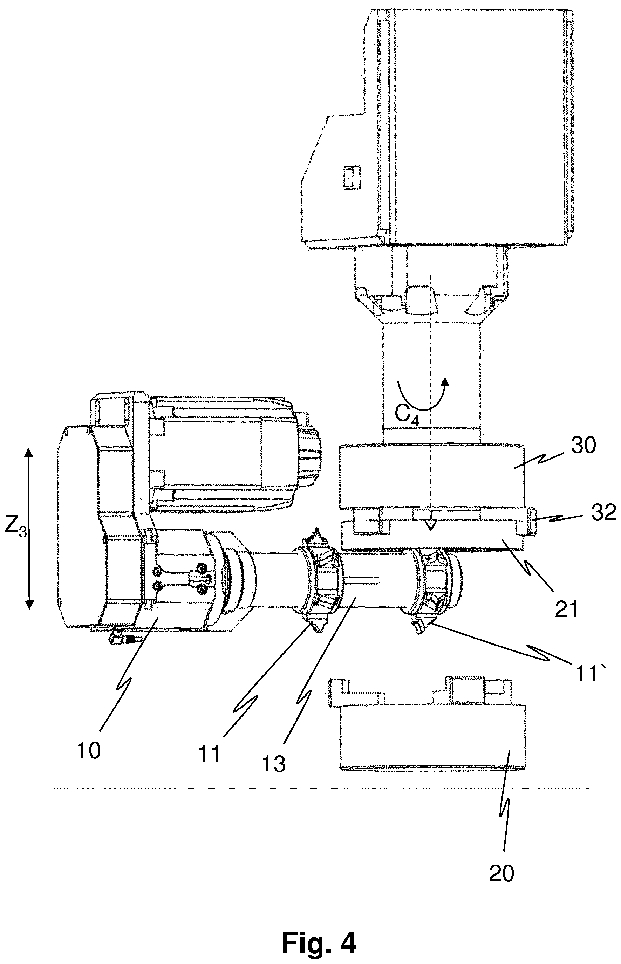

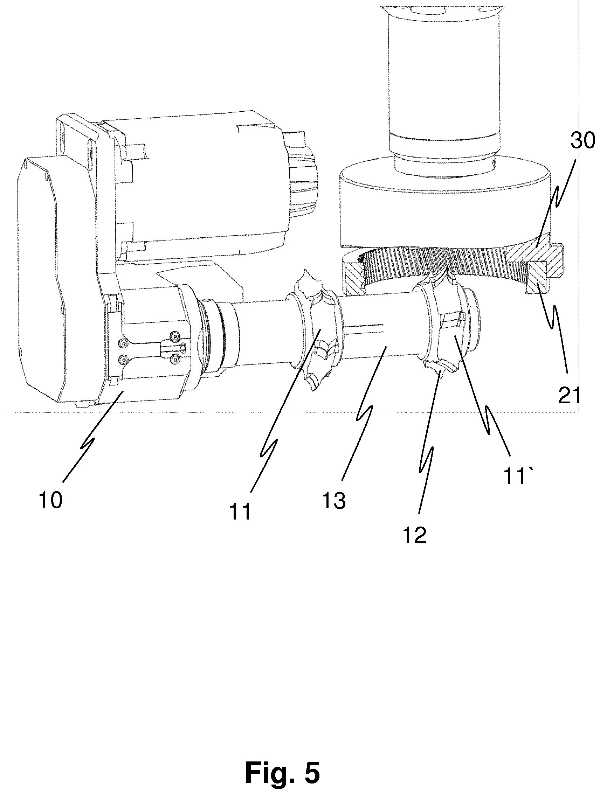

Wie beispielsweise in Fig. 4 und 5 ersichtlich, ist in gleicher Art und Weise auch eine Bearbeitung der Kanten der Verzahnung auf der Unterseite eines Werkstückes, welches dementsprechend oberhalb des Werkzeugdornes 13 bzw. des Anfasfräsers 11' angeordnet ist, möglich. Dies wird im Folgenden noch näher im Zusammenhang mit dem zweiten Aspekt der vorliegenden Erfindung beschrieben, ist aber selbstverständlich auch im Rahmen des ersten Aspektes möglich.

Bei dem in Fig. 1 dargestellten Ausführungsbeispiel ist die Werkzeugaufnahme 10 an einem Bearbeitungskopf 40 angeordnet und kann über dessen Maschinenachsen relativ zur Werkstückaufnahme 20 verfahren werden.

Der Bearbeitungskopf 40 ist im Ausführungsbeispiel an einem Maschinenständer 55 angeordnet. Dieser Maschinenständer 55 ist innerhalb eines Rahmens 50 angeordnet, welcher neben der Werkstückaufnahme 20 auf einer gemeinsamen Konsole 60 mit welcher die Einheit am Maschinenbett befestigt ist, vorgesehen ist. Die Maschinenachsen zum Bewegen des Bearbeitungskopfes 40 umfassen im Ausführungsbeispiel eine X3-Achse, mit welcher der Bearbeitungskopf in eine Richtung senkrecht zur Drehachse C3 der Werkstückaufnahme 20 und zur Drehachse B3 der Werkzeugaufnahme 10 verfahren werden kann, und eine Z3-Achse, über welche der Bearbeitungskopf in einer Richtung parallel zur Drehachse C3 der Werkstückaufnahme 20 verfahren werden kann.

Weiterhin ist eine Schwenkachse A3 vorgesehen, über welche der Bearbeitungskopf um eine Achse, welche senkrecht auf den Drehachsen B3 und C3 der Werkzeugaufnahme 10 und der Werkstückaufnahme 20 steht, verschwenkt werden kann. Weiterhin ist eine Shiftachse V3 vorgesehen, welche ein Vershiften der Werkzeugaufnahme 10 in Richtung ihrer Drehachse B3 erlaubt. Alternativ wäre auch eine Y3-Achse denkbar, über welche der Bearbeitungskopf 40 in einer Richtung senkrecht zur X3-Achse und zur Z3-Achse verfahren werden kann.

Bei den Achsen X3, Z3 und V3 handelt es sich bevorzugt um Linearachsen, welche beispielsweise über Schlitten realisiert werden können.

Es sind jedoch auch andere mechanische Achsen zum Verfahren des Bearbeitungskopfes denkbar. Weiterhin ist es denkbar, auf einzelne der im Ausführungsbeispiel dargestellten Achsen zu verzichten.

Im Ausführungsbeispiel ist die Werkzeugaufnahme 10 zusammen mit ihrem Antrieb 14 am Bearbeitungskopf 40 angeordnet. Die Anordnung erfolgt so, dass die Drehachse B3 der Werkzeugaufnahme beabstandet zu der dem Werkstück zugewandten Vorderseite des Maschinenständers 55 verläuft, und zwar in einer Ebene, welche senkrecht auf der X3-Achse steht.

Eine solche Ausgestaltung des Bearbeitungskopfes und der Werkstückaufnahme ist auch bei Bearbeitungsköpfen für außenverzahnte Werkstücke üblich.

Anders als bei der Bearbeitung von außenverzahnten Werkstücken erfolgt der Eingriff mit dem Werkstück jedoch nicht auf der dem Maschinenständer 55 abgewandten Seite des Anfasfräsers, sondern auf der dem Maschinenständer 55 zugewandten Seite des Anfasfräsers.

Hierfür bedarf es einer besonderen Zugänglichkeit des oder der in der Werkzeugaufnahme 10 aufgenommenen Anfasfräser. Insbesondere muss sich zur Bearbeitung der Kanten der Innenverzahnung der zu bearbeitende ringförmige Bereich des Werkstücks 21 in radialer Richtung bezüglich der Drehachse C3 der Werkstückaufnahme auf der dem Maschinenständer 55 zugewandten Seite des Anfasfräsers 11 erstrecken.

Dabei kann sich der zu bearbeitende ringförmige Bereich des Werkstücks 21 zwischen einer dem Werkstück zugewandten Vorderseite des Maschinenständers 55 und dem Anfasfräser erstrecken. Alternativ oder zusätzlich kann der Dorn 13 auch so lang ausgeführt werden, dass sich der Anfasfräser 11 bzw. 11' in Richtung der V3-Achse vor einer Seitenfläche des Maschinenständers 55 befindet. Hierdurch kann sich der zu bearbeitende ringförmige Bereich des Werkstücks 21 neben dem Maschinenständer 55 erstrecken.

Erfindungsgemäß wären jedoch auch andere Anordnungen des Bearbeitungskopfes und/oder der Werkzeugaufnahme 10 denkbar, solange eine entsprechende Zugänglichkeit des oder der in der Werkzeugaufnahme aufgenommenen Anfasfräser gegeben ist.

Bevorzugt weist die erfindungsgemäße Vorrichtung einen im Ausführungsbeispiel nicht dargestellten Sensor zum Einfädeln und/oder Einmitten des Anfasfräsers in die Innenverzahnung des Werkstücks auf. Bevorzugt handelt es sich um einen berührungslosen Sensor. Beispielsweise kann ein induktiver Sensor und/oder ein optischer Sensor eingesetzt werden.

Der Sensor zum Einfädeln und/oder Einmitten des Anfasfräsers wird vorzugsweise an einem separaten Arm geordnet, über welchen er in die Innenverzahnung des in der Werkstückaufnahme 20 aufgenommenen Werkstücks 21 hinein verfahren werden kann. Bevorzugt ist der Arm für den Sensor an dem Bearbeitungskopf 40 und/oder dem Maschinenständer 55 der Vorrichtung angeordnet und kann über dessen Maschinenachsen verfahren werden.

Die bisher beschriebene Ausgestaltung der vorliegenden Erfindung gemäß dem ersten Aspekt dient zunächst nur zur Bearbeitung der Kante auf einer ersten Stirnseite des in der Werkstückaufnahme 20 aufgenommenen Werkstücks, und zwar auf der von der Werkstückaufnahme 20 abgewandten Stirnseite, im Ausführungsbeispiel der Oberseite.

Durch Kombination mit einer Ausgestaltung gemäß dem zweiten Aspekt der vorliegenden Erfindung ist es jedoch möglich, die Kanten der Verzahnung sowohl auf der Oberseite, als auch auf der Unterseite des Werkstücks Anfaszubearbeiten. Der zweite Aspekt kann jedoch auch unabhängig von dem ersten Aspekt verwirklicht werden.

Gemäß dem zweiten Aspekt der vorliegenden Erfindung umfasst die erfindungsgemäße Vorrichtung neben der ersten Werkstückaufnahme 20 eine zweite Werkstückaufnahme 30, um die Kanten der Verzahnung sowohl auf der Oberseite, als auch auf der Unterseite des Werkstückes anfasbearbeiten zu können.

Im Ausführungsbeispiel wird die Kante der Verzahnung auf der Oberseite des Werkstücks 21 anfasbearbeitet, während dieses in der ersten Werkstückaufnahme 20 aufgenommen ist, und die Kante der Verzahnung auf der Unterseite des Werkstücks 21 anfasverzahnbearbeitet, während dieses in der zweiten Werkstückaufnahme 30 angeordnet ist. Dementsprechend ist das Werkstück 21 so in der ersten Werkstückaufnahme 20 aufgenommen, dass seine Unterseite zur Werkstückaufnahme 20 gerichtet ist, während die Oberseite frei zugänglich ist, und so in der zweiten Werkstückaufnahme 30 aufgenommen, dass seine Oberseite zur zweiten Werkstückaufnahme 30 gerichtet ist und die Unterseite frei zugänglich ist.

Die beiden Werkstückaufnahmen sind einander gegenüberliegend angeordnet, so dass ein Bearbeitungskopf ausreicht, um sowohl ein Werkstück, welches in der ersten Werkstückaufnahme 20 aufgenommen ist, als auch ein Werkstück, welches in der zweiten Werkstückaufnahme 30 aufgenommen ist, zu bearbeiten.

Insbesondere dieselbe Werkzeugaufnahme für beide Anfasbearbeitungsschritte eingesetzt werden.

Nach dem Bearbeiten der Kante der Verzahnung auf einer Seite der Verzahnung erfolgt ein Wechsel des Werkstücks von der einen Werkstückaufnahme zur anderen Werkstückaufnahme. Welche Seite zuerst bearbeitet wird, kann beliebig gewählt werden.

Im Ausführungsbeispiel sind die Drehachsen C3 und C4 der ersten und der zweiten Werkstückaufnahme 20 und 30 parallel angeordnet und fluchten miteinander.

Der Wechsel des Werkstücks von einer Werkstückaufnahme zur anderen Werkstückaufnahme wird bei dem in Fig. 1 bis 6 dargestellten Ausführungsbeispiel dadurch realisiert, dass die zweite Werkstückaufnahme 30 über eine Verfahrachse Z4, welche parallel zu ihrer Drehachse C4 verläuft, verfahrbar ist.

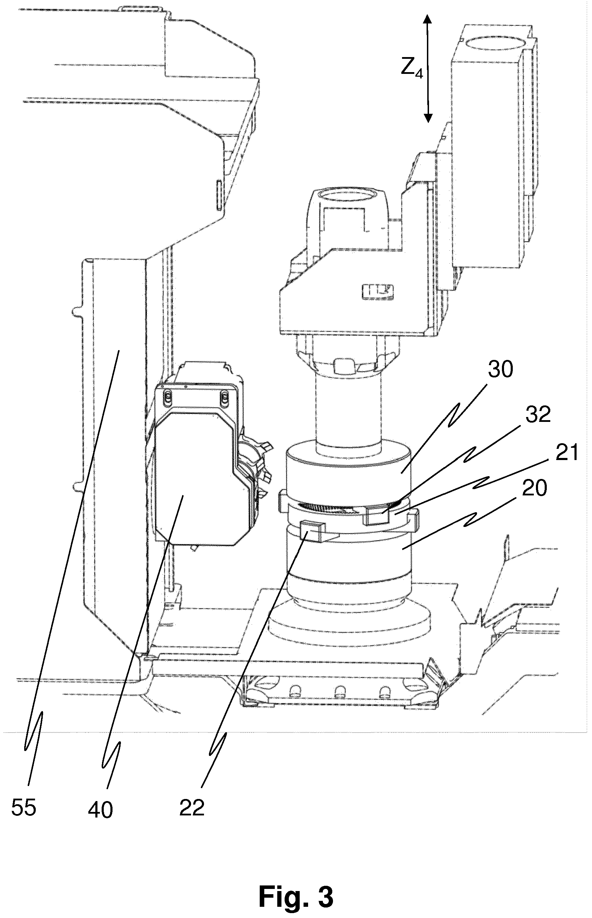

Wie in Fig. 3 dargestellt, kann hierdurch die zweite Werkstückaufnahme 30 auf ein in der ersten Werkstückaufnahme 20 aufgenommenes Werkstück 21 aufgesetzt werden, um dieses zu greifen und aus der ersten Werkstückaufnahme 20 anzuheben.

Die Werkstückaufnahmen 20 und 30 weisen hierfür Spannbacken 22 und 32 auf, welche gleichzeitig am Werkstück 21 angreifen können. Nachdem die zweite Werkstückaufnahme 30 auf das Werkstück 21 abgesenkt und das Werkstück über die Spannbacken 32 an der zweiten Werkstückaufnahme 30 gesichert wurde, werden daher die Spannbacken 22 der ersten Werkstückaufnahme 20 gelöst, um das Werkstück 21 freizugeben.

Die Position der Verzahnung des in der zweiten Werkstückaufnahme aufgenommenen Werkstücks 21 relativ zur zweiten Werkstückaufnahme 30 wird bevorzugt aus der bekannten Position der Verzahnung des Werkstücks 21 relativ zur ersten Werkstückaufnahme 20 und der Relativposition zwischen der ersten und der zweiten Werkstückeaufnahme 20 und 30 bei der Übergabe berechnet. Ein Sensor zum Einfädeln und/oder Einmitten des Anfasfräsers in die Verzahnung des an der zweiten Werkstückaufnahme 30 aufgenommenen Werkstücks 21 ist daher nicht notwendig.

Nach dem Anheben des Werkstücks, welches in der zweiten Werkstückaufnahme 30 aufgenommen ist, über die Z4-Achse, kann dann wie in Fig. 4 dargestellt eine Bearbeitung der Kante der Verzahnung auf der Unterseite des Werkstückes 21 erfolgen.

Die Z4-Achse ist im Ausführungsbeispiel über einen Schlitten 70 realisiert, welcher an einer Führung 80 verfahrbar ist und die zweite Werkstückaufnahme 30 trägt.

Die erfindungsgemäße Vorrichtung ist so ausgestaltet, dass ein in der ersten oder zweiten Werkstückaufnahme aufgenommenes Werkstück jeweils gemäß dem ersten Aspekt der Verzahnung bearbeitet wird. Hierfür wird mindestens in der Werkzeugaufnahme aufgenommener Anfasfräser über den Werkzeugdorn im Bereich der Mittenöffnung des Werkstücks angeordnet, wobei der Werkzeugdorn oberhalb bzw. unterhalb des Werkstücks von einem Außenbereich zum Innenbereich des Werkstücks verläuft.

Auch unabhängig von diesem Vorgehen sind in der Werkzeugaufnahme 10 zwei Anfasfräser 11 und 11' aufgenommen, welche für jeweils entgegengesetzte Drehrichtungen ausgelegt sind. Dementsprechend werden die Kanten der Verzahnung auf der Unterseite und der Oberseite mit einer jeweils entgegengesetzten Drehrichtung der Werkzeugaufnahme mit dem Anfasfräser 11 bzw. dem Anfasfräser 11' verzahnbearbeitet. Hierdurch ergibt sich eine identische Schnittrichtung zwischen Anfasfräser und dem Werkstück sowohl auf der Oberseite als auch auf der Unterseite des Werkstücks.

Das erfindungsgemäße Verfahren gemäß dem ersten Aspekt der vorliegenden Erfindung wird zunächst noch einmal anhand von Fig. 2 näher beschrieben:
Ein Werkstück 21 wird in der Werkstückaufnahme 20 aufgenommen, während die Anfasfräser 11 und 11' zusammen mit der Werkzeugaufnahme 10 neben der Werkstückaufnahme 20 oder so weit oberhalb der Werkstückaufnahme 20 angeordnet sind, dass sie keine Störkanten für das Wechseln des Werkstückes bilden.

Der Anfasfräser 11 wird sodann durch Verfahren der X3- und/oder Z3-Achse in Eingriff mit dem Kantenbereich der Innenverzahnung auf der Oberseite des in der Werkstückaufnahme 20 aufgenommenen Werkstücks 21 gebracht. War der Anfasfräser 11 zuvor neben der Werkstückaufnahme 20 angeordnet, wird der gesamte Bearbeitungskopf über die X3-Achse auf die Werkstückaufnahme 20 zu bewegt, bis sich der Anfasfräser 11 oberhalb der Mittenöffnung des innenverzahnten Werkstücks 21 befindet. Sodann wird der Anfasfräser durch Absenken des Bearbeitungskopfes über die Z3-Achse mit der Kante in Eingriff gebracht, um diese verzahnzubearbeiten. Befand sich der Anfasfräser 11 bereits oberhalb der Werkstückaufnahme 20, bedarf es lediglich des Absenkens über die Z3-Achse.

Die A3-Achse sowie die V3-Achse können dazu eingesetzt werden, um die genaue Position des Anfasfräsers relativ zum Werkstück 21 einzustellen.

Nach dem Anfasbearbeiten der Kante der Verzahnung auf der Oberseite des Werkstücks wird der Bearbeitungskopf über die Z3-Achse angehoben, sodass der Anfasfräser 11 aus der Mittenöffnung der Verzahnung heraus bewegt wird, und sodann durch Verfahren des Bearbeitungskopfes über die X3-Achse oder V3-Achse neben die Werkstückaufnahme 20 bewegt.

Daraufhin wird gemäß dem zweiten Aspekt der vorliegenden Erfindung die zweite Werkstückaufnahme 30 abgesenkt, um das Werkstück 21 zu übernehmen.

Nach dem erneuten Anheben erfolgt nun eine Anfasverzahnbearbeitung der Kante der Verzahnung auf der Unterseite des Werkstücks 21, wie dies in Fig. 4 und 5 näher dargestellt ist. Die Anfasverzahnbearbeitung erfolgt hier in gleicher Weise gemäß dem ersten Aspekt der vorliegenden Erfindung wie zuvor im Hinblick auf die Anfasbearbeitung der Kante auf der Oberseite des Werkstücks beschrieben entgegengesetzte Drehrichtung gewählt. Weiterhin wird die Position des Bearbeitungskopfes im Hinblick auf den größeren Abstand des Anfasfräsers 11' zur Werkzeugaufnahme 10 entsprechend angepasst werden, insbesondere durch Verfahren über die V3-Achse.

Wie aus Fig. 2, 4 und 5 ersichtlich, ist beim Bearbeiten einer Kante der Verzahnung des innenverzahnten Werkstückes nur der hierfür vorgesehene Anfasfräser im Bereich der Mittenbohrung des Werkstückes angeordnet, der jeweils andere Anfasfräser dagegen außerhalb des Werkstücks. Hierfür muss der Abstand der Anfasfräser 11 und 11' auf dem gemeinsamen Werkzeugdorn 13 entsprechend groß gewählt werden.

Auch unabhängig von den konkreten Ausführungsbeispielen wird im Rahmen der vorliegenden Erfindung bevorzugt ein Chamfer-Cut-Fräser als Anfasfräser eingestaltet. Ein Chamfer-Cut-Fräser ist ein scheibenförmiges Entgratwerkzeug 11, welches am Umfang Schneidzähne 12 und Spahnnuten aufweist, bevorzugt mit jeweils gleichem Umfangsabstand.

Bevorzugt ist das Profil der Schneidzähne 12 des Chamfer-Cut-Fräsers spezifisch für die Anfasbearbeitung der Kante einer Innenverzahnung ausgelegt.

Die Schneidzähne haben einen in Umfangsrichtung schraubenlinienförmigen Verlauf. Der Chamfer-Cut-Fräser ist mehrgängig, wobei pro Gang ein Zahn vorgesehen ist. Die an der in Drehrichtung vorderen Seite der Zähne ausgebildeten Schneidkanten liegen jedoch auf einem gemeinsamen Flugkreis. Zum Anfasen einer Kante mit dem Chamfer-Cut-Fräser wird die Drehbewegung zwischen dem Chamfer-Cut-Fräser und dem Werkstück so synchronisiert, dass jeweils ein Zahn mit einer Zahnlücke des Werkstücks zusammentrifft.

Bei einem gradverzahnten Zahnrad ist das Profil der Schneidkanten der Schneidzähne symmetrisch zur Mittenebene des Entgratwerkzeugs. Beim schräg verzahnten Zahnrad ist es entgegen unsymmetrisch.

Zum Anfasen wird der Chamfer-Cut-Fräser 11 in eine Position gebracht, wie dies in Fig. 5 wiedergegeben ist. Während der Bearbeitung der Stirnkanten der Zahnnuten drehen das Werkstück 21 und der Chamfer-Cut-Fräser 11 in einem vorgegebenen Drehzahlverhältnis, so dass jeweils ein Schneidzahn 12 die Stirnkanten einer Zahnnut bearbeitet. Es versteht sich, dass der Chamfer-Cut-Fräser 11 bzw. die Zähne 12 entsprechend den Parametern der Verzahnung des Werkstücks 21 ausgelegt sind, damit der gewünschte Eingriff mit den Stirnkanten der Zahnnuten erfolgen kann.

Die erfindungsgemäße Vorrichtung weist eine Steuerung auf, durch welche die Drehachsen von Werkzeugaufnahme und Werkstückaufnahme sowie die Maschinenachsen zur Verstellung der relativen Position zwischen Werkzeugaufnahme und Werkstückaufnahme angesteuert werden. Die Steuerung steuert die erfindungsgemäße Vorrichtung automatisch an. Sie ist dabei so programmiert, dass die oben näher beschriebenen Verfahren bzw. Anwendungsweisen der erfindungsgemäßen Vorrichtung automatisiert durchgeführt werden.

Die erfindungsgemäße Vorrichtung zum Anfasen von Werkstücken kann in einem Bearbeitungszentrum in Kombination mit einer Verzahnmaschine eingesetzt werden, welche zuvor die Verzahnung am Werkstück erzeugt. Bei der Verzahnmaschine kann es sich beispielsweise um eine Verzahnungsfräsmaschine zur Bearbeitung von Innenverzahnungen oder eine Verzahnungsstoßmaschine oder um eine Wälzschab-Maschine handeln, welche besonders geeignet zur Herstellung von Innenverzahnungen sind.

Die Verzahnmaschine und die erfindungsgemäße Vorrichtung können jeweils separate Werkstückaufnahmen aufweisen, wobei ein Werkstückwechsler vorgesehen ist, um die Werkstücke von der Verzahnmaschine zur erfindungsgemäßen Vorrichtung zum Anfasen zu transportieren. Alternativ können die Werkstücke auf einer Werkstückaufnahme eingespannt verbleiben und auf der Werkstückaufnahme von der Verzahnmaschine zur erfindungsgemäßen Vorrichtung transportiert werden.

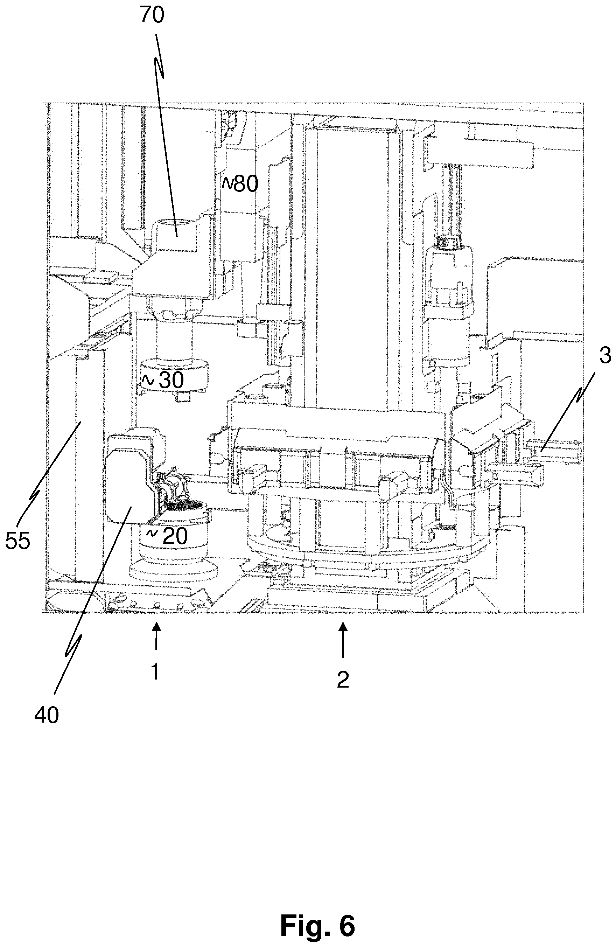

In Fig. 6 ist ein Ausführungsbeispiel eines Verzahnzentrums gezeigt, welches eine erfindungsgemäße Vorrichtung 1 gemäß dem oben näher beschriebenen Ausführungsbeispiel umfasst.

Die Werkstückaufnahme 20 ist im Ausführungsbeispiel fest der erfindungsgemäßen Vorrichtung zugeordnet, und wird über einen Ringlader 3 mit Werkstücken bestückt. Die in Fig. 6 nicht dargestellte Verzahnmaschine ist an einer anderen Winkelposition 2, beispielsweise in einem Winkel von 90° zur erfindungsgemäßen Vorrichtung 1, relativ zum Ringlader 3 angeordnet. Der Ringlader 3 kann daher in der Verzahnmaschine verzahnte Werkstücke zur erfindungsgemäßen Vorrichtung transportieren. Gegebenenfalls können die Werkstücke auch wieder zurück zur Verzahnmaschine transportiert werden, beispielsweise um ein Anfasen zwischen einem Schruppschritt und einem Schlichtschritt zu ermöglichen.

Die Schiene 80, über welche die Z4-Achse zum Verfahren der zweiten Werkstückaufnahme 30 bereitgestellt wird, ist im Ausführungsbeispiel an einem Maschinenständer angeordnet, welcher auch den Ringlader 3 trägt. Der Bearbeitungskopf 40 ist dagegen in einer dem Ringlader entgegengesetzten Position angeordnet.

## Patentansprüche

1. Vorrichtung zum Anfasen mindestens einer stirnseitigen Kante der Verzahnung eines innenverzahnten Werkstücks (21) mit mindestens einer drehbar gelagerten Werkstückaufnahme (20) zur Aufnahme des Werkstücks und mit mindestens einer drehbar gelagerten Werkzeugaufnahme (10) zur Aufnahme mindestens eines Anfasfräsers (11), insbesondere eines Chamfer-Cut-Fräsers, und mit einer Steuerung zur automatischen Ansteuerung der Maschinenachsen zum Anfasen der Kanten der Verzahnung auf mindestens einer und bevorzugt beider Stirnseiten des Werkstücks (21),
**dadurch gekennzeichnet,**
**dass** die Steuerung so programmiert ist, dass die Werkzeugaufnahme (10) neben einem in der Werkstückaufnahme aufgenommenen Werkstück (21) angeordnet ist oder wird und ein in der Werkzeugaufnahme aufgenommener Anfasfräser (11) mittels eines Werkzeugdorns (13) im Bereich der durch die Innenverzahnung gebildeten Mittenöffnung des Werkstücks (21) angeordnet wird, um mit einer Kante der Innenverzahnung auf der Oberseite und/oder Unterseite des Werkstücks in Eingriff gebracht zu werden.

2. Vorrichtung nach Anspruch 1, wobei der Werkzeugdorn (13) beim Anfasen der Kante der Verzahnung auf der Oberseite und/oder Unterseite des Werkstücks (21) ausgehend von der Werkzeugaufnahme (10) an dem innenverzahnten Ringbereich des Werkstücks (21) vorbei von einem Außenbereich des Werkstücks zum Innenbereich des Werkstücks verläuft.

3. Vorrichtung nach Anspruch 1 oder 2, wobei der am Werkzeugdorn (13) angeordnete Anfasfräser (11) von einer Unterseite und/oder Oberseite aus zugänglich ist, und/oder wobei die Werkzeugaufnahme (10) über einen Bearbeitungskopf (40) an einem Maschinenständer (55) angeordnet ist, wobei sich der Bearbeitungskopf bevorzugt senkrecht zur Drehachse (C3, B3) der Werkstückaufnahme (20) und/oder der Werkzeugaufnahme (10) von dem Maschinenständer weg erstreckt, und/oder wobei die Werkzeugaufnahme (10) bevorzugt so an dem Bearbeitungskopf (40) angeordnet ist, dass sie sich parallel zu der der Werkstückaufnahme zugewandten Vorderseite des Maschinenständers (55) erstreckt.

4. Vorrichtung nach einem der vorangegangenen Ansprüche, wobei die Vorrichtung eine zweite drehbar gelagerte Werkstückaufnahme (30) zur Aufnahme des Werkstücks aufweist, wobei eine Kante der Verzahnung auf einer ersten Stirnseite des Werkstücks (21) anfasbearbeitbar ist, während das Werkstück in der ersten Werkstückaufnahme (20) aufgenommen ist und die Kante auf einer zweiten Stirnseite des Werkstücks anfasbearbeitbar ist, während das Werkstück (21) in der zweiten Werkstückaufnahme (30) aufgenommen ist.

5. Vorrichtung nach Anspruch 4, wobei die Vorrichtung einen über Maschinenachsen verfahrbaren Bearbeitungskopf (40) aufweist, welcher zur Anfasbearbeitung der Kanten der Verzahnung sowohl auf der ersten als auch der zweiten Stirnseite dient, wobei die Werkzeugaufnahme (10) bevorzugt am Bearbeitungskopf angeordnet ist und/oder wobei die Anfasbearbeitung der Kanten der Verzahnung auf der ersten und der zweiten Stirnseite über den selben Anfasfräser (11) oder mehrere in derselben Werkzeugaufnahme aufgenommene Anfasfräser (11, 11') erfolgt.

6. Vorrichtung nach Anspruch 4 oder 5, wobei eine Vorrichtung zum Wechseln des Werkstücks von der ersten Werkstückaufnahme zur zweiten Werkstückaufnahme und/oder umgekehrt vorgesehen ist, wobei bevorzugt mindestens eine der beiden Werkstückaufnahmen (20, 30) so verfahrbar ist, dass sie ein in der anderen Werkstückaufnahme aufgenommenes Werkstück greifen kann und/oder wobei bevorzugt ein Werkstückwechsler zum Verfahren des Werkstücks von der einen Werkstückaufnahme zur anderen Werkstückaufnahme vorgesehen ist,
und/oder wobei die beiden Werkstückaufnahmen (20, 30) auf zwei gegenüberliegenden Seiten eines Arbeitsbereiches angeordnet oder anordenbar sind, wobei bevorzugt je nachdem, in welcher Werkstückaufnahme das Werkstück aufgenommen ist, dieses mit seiner ersten oder zweiten Stirnseite dem Arbeitsbereich zugewandt ist,
und/oder wobei die beiden Werkstückaufnahmen (20, 30) parallele Drehachsen aufweisen und bevorzugt koaxial angeordnet sind.

7. Vorrichtung nach einem der Ansprüche 4 bis 6, wobei die Werkzeugaufnahme (10) neben den beiden Werkstückaufnahmen (20, 30) angeordnet und/oder anordenbar ist und mindestens ein Anfasfräser mittels eines Werkzeugdorns (13) oberhalb der durch die Innenverzahnung gebildeten Mittenöffnung des Werkstücks (21) anordenbar ist, wenn dieses in der ersten Werkstückaufnahme (20) angeordnet ist, um mit einer Kante der Verzahnung auf der Oberseite des Werkstücks in Eingriff gebracht zu werden, und mittels eines Werkzeugdorns (13) unterhalb der durch die Innenverzahnung gebildeten Mittenöffnung anordenbar ist, wenn dieses in der zweiten Werkstückaufnahme (30) angeordnet ist, um mit einer Kante der Verzahnung auf der Unterseite des Werkstücks in Eingriff gebracht zu werden, wobei bevorzugt zur Anfasbearbeitung der Kanten der Verzahnung auf Oberseite und Unterseite die gleiche Werkzeugaufnahme eingesetzt wird.

8. Vorrichtung nach Anspruch 7, wobei zum Bearbeiten der Kanten der Verzahnung auf Oberseite und Unterseite separate, bevorzugt auf dem gleichen Werkzeugdorn angeordnete Anfasfräser (11, 11') eingesetzt werden, oder wobei zum Bearbeiten der Kanten der Verzahnung auf Oberseite und Unterseite der selbe Anfasfräser (11) eingesetzt wird, welcher bevorzugt in einer bezüglich der Drehachse der ersten Werkstückaufnahme (20) ersten radialen Richtung mit einem Kantenbereich der Verzahnung auf einer ersten Seite des Werkstücks in Eingriff gebracht wird und nach dem Wechsel des Werkstücks in die zweite Werkstückaufnahme durch Verfahren der Werkzeugaufnahme (10) in einer bezüglich der Drehachse der zweiten Werkstückaufnahme (30) zweiten radialen Richtung mit einem radial gegenüberliegenden Kantenbereich der Verzahnung auf der zweiten Seite des Werkstücks in Eingriff gebracht wird.

9. Vorrichtung nach einem der Ansprüche 7 oder 8, wobei der oder die auf einem Werkzeugdorn (13) angeordneten Anfasfräser von zwei Seiten aus zugänglich sind, um mit einer Kante des Werkstücks in Eingriff gebracht werden zu können.

10. Vorrichtung nach einem der vorangegangenen Ansprüche, wobei die Werkzeugaufnahme (10) an einem Bearbeitungskopf (40) angeordnet ist und über dessen Maschinenachsen relativ zur Werkstückaufnahme (20) verfahren wird, wobei die Maschinenachsen zum Bewegen des Bearbeitungskopfes (40) eine erste Linearachse (Z3) umfassen, über welche der Bearbeitungskopf in einer Richtung parallel zur Drehachse (C3) der Werkstückaufnahme (20) verfahren werden kann, wobei die Maschinenachsen zum Bewegen des Bearbeitungskopfes (40) bevorzugt eine zweite Linearachse (X3) umfassen, mit welcher der Bearbeitungskopf in eine Richtung senkrecht zur Drehachse (C3) der Werkstückaufnahme (20) und zur Drehachse (B3) der Werkzeugaufnahme (10) verfahren werden kann und/oder wobei die Maschinenachsen zum Bewegen des Bearbeitungskopfes (40) bevorzugt eine Schwenkachse (A3) umfassen, über welche der Bearbeitungskopf um eine Achse, welche senkrecht auf den Drehachsen (B3, C3) der Werkzeugaufnahme (10) und der Werkstückaufnahme (20) steht, verschwenkt werden kann.

11. Vorrichtung nach einem der vorangegangenen Ansprüche, mit mindestens einem in der Werkzeugaufnahme aufgenommenen Anfasfräser (11), insbesondere mit mindestens einem in der Werkzeugaufnahme aufgenommenen Chamfer-Cut-Fräser.

12. Verzahnbearbeitungszentrum mit einer Vorrichtung (1) nach einem der vorangegangenen Ansprüche, einer Verzahnmaschine und einem Werkstückwechsler (3), wobei es sich bei der Verzahnmaschine zur Bearbeitung von Innenverzahnungen, bevorzugt um eine Verzahnungsfräsmaschine oder eine Verzahnungsstoßmaschine oder eine Wälzschälmaschine, handelt, und/oder wobei die Verzahnbearbeitung und das Anfasen der Werkstücke taktzeit-parallel erfolgen, und/oder wobei es sich bei dem Werkstückwechsler (3) um eine Ring-Automation handelt und die Vorrichtung nach einem der vorangegangenen Ansprüche und die Verzahnmaschine an unterschiedlichen Winkelpositionen der Ring-Automation angeordnet sind.

13. Verfahren zum Anfasen mindestens einer stirnseitigen Kante der Verzahnung eines innenverzahnten Werkstücks (21), insbesondere durch eine Vorrichtung nach einem der vorangegangenen Ansprüche, durch mindestens einen in einer drehbar gelagerten Werkzeugaufnahme (10) aufgenommenen Anfasfräser (11), insbesondere einen Chamfer-Cut-Fräser,
**dadurch gekennzeichnet,**
**dass** die Werkzeugaufnahme (10) neben einem in einer Werkstückaufnahme (20) aufgenommenen Werkstück (21) angeordnet wird und der in der Werkzeugaufnahme aufgenommene Anfasfräser (11) über einen Werkzeugdorn (13) im Bereich der durch die Innenverzahnung gebildeten Mittenöffnung angeordnet wird, um mit einer Kante der Verzahnung auf der Oberseite und/oder Unterseite des Werkstücks (21) in Eingriff gebracht zu werden.

14. Verfahren nach Anspruch 13, wobei die Kante der Verzahnung auf einer ersten Stirnseite des Werkstücks anfasbearbeitet wird, während das Werkstück in einer ersten Werkstückaufnahme (20) aufgenommen ist und die Kante der Verzahnung auf einer zweiten Stirnseite des Werkstücks anfasbearbeitet wird, während das Werkstück in einer zweiten Werkstückaufnahme (30) aufgenommen ist.

15. Verwendung eines Anfasfräsers, insbesondere eines Chamfer-Cut-Fräsers, zur Durchführung eines Verfahrens nach einem der Ansprüche 13 und/oder 14 und/oder in einer Vorrichtung nach einem der Ansprüche 1 bis 12.

## Claims

1. An apparatus for chamfering at least one edge of the gearing at the front side of a workpiece (21) having internal gearing comprising at least one rotatably supported workpiece holder (20) for holding the workpiece and comprising at least one rotatably supported tool holder (10) for holding at least one chamfer hob (11), in particular a chamfer cut hob, and comprising a control for the automatic control of the machine axes for chamfering the edges of a gearing on at least one front side, and preferably on both front sides, of a workpiece (21);
**characterized in that**
the control is programmed such that the tool holder (10) is or will be arranged next to a workpiece (21) held in the workpiece holder and a chamfer hob (11) held in the tool holder is arranged by means of a tool arbor (13) in the region of the center opening of the workpiece (21) formed by the internal gearing to be brought into engagement with an edge of the internal gearing on the upper side and/or on the lower side of the workpiece.

2. An apparatus in accordance with claim 1, wherein the tool arbor (13) extends on the chamfering of the edge of the gearing on the upper side and/or on the lower side of the workpiece (21), starting from the tool holder (10), past the annular region of the workpiece (21) having internal gearing from an outer region of the workpiece to the inner region of the workpiece.

3. An apparatus in accordance with claim 1 or claim 2, wherein the chamfer hob (11) arranged at the tool arbor (13) is accessible from a lower side and/or from an upper side; and/or wherein the tool holder (10) is arranged via a machining head (40) at a machine column (55), with the machining head preferably extending perpendicular to the axis of rotation (C3, B3) of the workpiece holder (20) and/or of the tool holder (10) away from the machine column; and/or wherein the tool holder (10) is preferably arranged at the machining head (40) such that it extends in parallel with the front side of the machine column (55) facing the workpiece holder.

4. An apparatus in accordance with one of the preceding claims, wherein the apparatus has a second rotatably supported workpiece holder (30) for holding the workpiece, with an edge of the gearing being chamfer machinable on a first front side of the workpiece (21) while the workpiece is held in the first workpiece holder (20) and the edge on a second front side of the workpiece being chamfer machinable while the workpiece (21) is held in the second workpiece holder (30).

5. An apparatus in accordance with claim 4, wherein the apparatus has a machining head (40) that is travelable over machine axes and that serves the chamfer machining of the edges of the gearing both on the first front side and on the second front side, with the tool holder (10) preferably being arranged at the machining head and/or with the chamfer machining of the edges of the gearing on the first and second front sides taking place via the same chamfer hob (11) or via a plurality of chamfer hobs (11, 11') held in the same tool holder.

6. An apparatus in accordance with claim 4 or claim 5, wherein an apparatus is provided for changing the workpiece from the first workpiece holder to the second workpiece holder and/or vice versa, with at least one of the two workpiece holders (20, 30) preferably being travelable so that it can grip a workpiece held in the other workpiece holder and/or with a workpiece changer preferably being provided for traveling the workpiece from the one workpiece holder to the other workpiece holder,
and/or wherein the two workpiece holders (20, 30) are arranged or arrangeable on two oppositely disposed sides of a work region, with the first or second front side of the workpiece facing the work region depending on the workpiece holder in which it is held,
and/or wherein the two workpiece holders (20, 30) have parallel axes of rotation and are preferably arranged coaxially.

7. An apparatus in accordance with one of the claims 4 to 6, wherein the tool holder (10) is arranged and/or arrangeable next to the two workpiece holders (20, 30) and at least one chamfer hob is arrangeable by means of a tool arbor (13) above the center opening of the workpiece (21) formed by the internal gearing when said workpiece is arranged in the first workpiece holder (20) to be brought into engagement with an edge of the gearing on the upper side of the workpiece and is arrangeable by means of a tool arbor (13) beneath the center opening formed by the inner gearing when it is arranged in the second workpiece holder (30) to be brought into engagement with an edge of the gearing on the lower side of the workpiece, with the same tool holder preferably being used for the chamfer machining of the edges of the gearing on the upper side and on the lower side.

8. An apparatus in accordance with claim 7, wherein separate chamfer hobs (11, 11'), preferably arranged on the same tool arbor, are used for machining the edges of the gearing on the upper side and on the lower side, or wherein the same chamfer hob (11) is used for machining the edges of the gearing on the upper side and on the lower side that is preferably brought into engagement with an edge region of the gearing on a first side of the workpiece in a first radial direction with respect to the axis of rotation of the first workpiece holder (20) and, after the change of the workpiece into the second workpiece holder by traveling the tool holder (10) in a second radial direction with respect to the axis of rotation of the second workpiece holder (30), is brought into engagement with a radially oppositely disposed edge region of the gearing on the second side of the workpiece.

9. An apparatus in accordance with one of the claims 7 or 8, wherein the chamfer hob or hobs arranged on a tool arbor (13) is/are accessible from two sides to be able to be brought into engagement with an edge of the workpiece.

10. An apparatus in accordance with one of the preceding claims, wherein the tool holder (10) is arranged on a machining head (40) and/or is traveled over its machine axes relative to the workpiece holder (20), wherein the machine axes for moving the machining head (40) comprise a first linear axis (Z3) over which the machining head can be traveled in a direction in parallel with the axis of rotation (C3) of the workpiece holder (20), wherein the machine axes for moving the machining head (40) preferably comprise a second linear axis (X3) by which the machining head can be traveled in a direction in parallel with the axis of rotation (C3) of the workpiece holder (20) and with the axis of rotation (B3) of the tool holder (10), and/or wherein the machine axes for moving the machine head (40) preferably comprise a pivot axis (A3) over which the machining head can be pivoted about an axis that is perpendicular to the axes of rotation (B3, C3) of the tool holder (10) and of the workpiece holder (20).

11. An apparatus in accordance with one of the preceding claims, comprising at least one chamfer hob (11) held in the tool holder, in particular comprising at least one chamfer cut hob held in the tool holder.

12. A gear manufacturing machining center having an apparatus (1) in accordance with one of the preceding claims, a gear cutting machine, and a workpiece changer (3), with the gear cutting machine for machining internal gearings preferably being a gear hobbing machine or a chamfer cut deburring device or a skiving machine, and/or with the gear manufacturing machining and the chamfering of the workpieces taking place with parallel cycle times, and/or with the workpiece changer (3) being a ring automation and the apparatus in accordance with one of the preceding claims and the gear cutting machine being arranged at different angular positions of the ring automation.

13. A method of chamfering at least one front-side edge of the gearing of a workpiece (21) having internal gearing, in particular by an apparatus in accordance with one of the preceding claims, by at least one chamfer hob (11), in particular a chamfer cut hob, held in a rotatably supported tool holder (10),
**characterized in that**
the tool holder (10) is arranged next to a workpiece (21) held in a workpiece holder (20) and the chamfer hob (11) held in the tool holder is arranged via a tool arbor (13) in the region of the center opening formed by the internal gearing to be brought into engagement with an edge of the gearing on the upper side and/or on the lower side of the workpiece (21).

14. A method in accordance with claim 13, wherein the edge of the gearing is chamfer machined on a first front side of the workpiece while the workpiece is held in a first workpiece holder (20) and the edge of the gearing on a second front side of the workpiece is chamfer machined while the workpiece is held in a second workpiece holder (30).

15. Use of a chamfer hob, in particular of a chamfer cut hob, for carrying out a method in accordance with one of the claims 13 and/or 14 and/or in an apparatus in accordance with one of the claims 1 to 12.

## Revendications

1. Dispositif de chanfreinage d'au moins une arête de face frontale de la denture d'une pièce (21) à denture intérieure comprenant au moins une fixation de pièce (20) montée rotative destinée à recevoir la pièce et comprenant au moins un logement d'outil (10) monté rotatif destiné à recevoir au moins une fraise à chanfreiner (11), en particulier une fraise ChamferCut, et comprenant un dispositif de commande pour la commande automatique des axes de machine pour le chanfreinage des arêtes de la denture sur au moins une et de préférence les deux faces frontales de la pièce (21),
**caractérisé en ce que**
le dispositif de commande est programmé de telle sorte que le logement d'outil (10) est disposé à côté d'une pièce (21) reçue dans la fixation de pièce et une fraise à chanfreiner (11) reçue dans le logement d'outil est disposée au moyen d'un mandrin d'outil (13) dans la zone de l'ouverture centrale de la pièce (21) formée par la denture intérieure pour être amenée en prise avec une arête de la denture intérieure sur la face supérieure et/ou la face inférieure de la pièce.

2. Dispositif selon la revendication 1, dans lequel, lors du chanfreinage de l'arête de la denture sur la face supérieure et/ou la face inférieure de la pièce (21), le mandrin d'outil (13) s'étend, à partir du logement d'outil (10) au-delà de la zone annulaire à denture intérieure de la pièce (21), d'une zone extérieure de la pièce à la zone intérieure de la pièce.

3. Dispositif selon la revendication 1 ou 2, dans lequel la fraise à chanfreiner (11 ) disposée sur le mandrin d'outil (13) est accessible depuis une face supérieure et/ou une face inférieure, et/ou dans lequel le logement d'outil (10) est disposé sur un montant de machine (55) par le biais d'une tête d'usinage (40), la tête d'usinage s'étendant de préférence à partir du montant de machine perpendiculairement à l'axe de rotation (C3, B3) de la fixation de pièce (20) et/ou du logement d'outil (10), et/ou dans lequel le logement d'outil (10) est de préférence disposé sur la tête d'usinage (40) de façon à s'étendre parallèlement à la face avant orientée vers la fixation de pièce du montant de machine (55).

4. Dispositif selon l'une des revendications précédentes, le dispositif comportant une seconde fixation de pièce (30) montée rotative destinée à recevoir la pièce, une arête de la denture pouvant être usinée par chanfreinage sur une première face frontale de la pièce (21) alors que la pièce est reçue dans la première fixation de pièce (20) et l'arête sur une seconde face frontale de la pièce pouvant être usinée par chanfreinage alors que la pièce (21) est reçue dans la seconde fixation de pièce (30).

5. Dispositif selon la revendication 4, le dispositif comportant une tête d'usinage (40) déplaçable sur des axes de machine, qui sert à l'usinage par chanfreinage des arêtes de la denture tant sur la première que sur la seconde face frontale, le logement d'outil (10) étant de préférence disposé sur la tête d'usinage et/ou l'usinage par chanfreinage des arêtes de la denture sur la première et la seconde face frontale étant effectué par le biais de la même fraise à chanfreiner (11) ou de plusieurs fraises à chanfreiner (11, 11') reçues dans le même logement d'outil.

6. Dispositif selon la revendication 4 ou 5, dans lequel un dispositif pour passer la pièce de la première fixation de pièce à la seconde fixation de pièce et/ou inversement est prévu, au moins une des deux fixations de pièce (20, 30) pouvant de préférence être déplacée de manière à pouvoir saisir une pièce reçue dans l'autre fixation de pièce et/ou un changeur de pièce étant prévu pour déplacer la pièce d'une fixation de pièce à l'autre fixation de pièce,
et/ou dans lequel les deux fixations de pièce (20, 30) sont ou peuvent être disposées sur deux côtés opposés d'une zone de travail, la pièce étant de préférence orientée vers la zone de travail avec sa première ou sa seconde face frontale selon la fixation de pièce dans laquelle elle est reçue,
et/ou dans lequel les deux fixations de pièce (20, 30) comportent des axes de rotation parallèles et sont de préférence disposées de manière coaxiale.

7. Dispositif selon l'une des revendications 4 à 6, dans lequel le logement d'outil (10) est et/ou peut être disposé à côté des deux fixations de pièce (20, 30) et au moins une fraise à chanfreiner peut être disposée au-dessus de l'ouverture centrale de la pièce (21) formée par la denture intérieure au moyen d'un mandrin d'outil (13), lorsque la pièce est disposée dans la première fixation de pièce (20), pour être amenée en prise avec une arête de la denture sur la face supérieure de la pièce, et peut être disposée en dessous de l'ouverture centrale formée par la denture intérieure au moyen d'un mandrin d'outil (13), lorsque la pièce est disposée dans la seconde fixation de pièce (30), pour être amenée en prise avec une arête de la denture sur la face inférieure de la pièce, le même logement d'outil étant de préférence utilisé pour l'usinage par chanfreinage des arêtes de la denture sur la face supérieure et la face inférieure.

8. Dispositif selon la revendication 7, dans lequel, pour l'usinage des arêtes de la denture sur la face supérieure et la face inférieure, des fraises à chanfreiner (11, 11') séparées, de préférence disposées sur le même mandrin d'outil, sont utilisées, ou dans lequel, pour l'usinage des arêtes de la denture sur la face supérieure et la face inférieure, la même fraise à chanfreiner (11) est utilisée, qui est de préférence amenée en prise avec une zone d'arête de la denture sur un premier côté de la pièce dans une première direction radiale par rapport à l'axe de rotation de la première fixation de pièce (20) et qui, après le passage de la pièce dans la seconde fixation de pièce par le déplacement du logement d'outil (10), est amenée en prise avec une zone d'arête radialement opposée de la denture sur le second côté de la pièce dans une seconde direction radiale par rapport à l'axe de rotation de la seconde fixation de pièce (30).

9. Dispositif selon l'une des revendications 7 et 8, dans lequel la ou les fraises à chanfreiner disposées sur un mandrin d'outil (13) sont accessibles par deux côtés pour pouvoir être amenées en prise avec une arête de la pièce.

10. Dispositif selon l'une des revendications précédentes, dans lequel le logement d'outil (10) est disposé sur une tête d'usinage (40) et est déplacé, par le biais des axes de machine de celle-ci, par rapport à la fixation de pièce (20), les axes de machine destinés au déplacement de la tête d'usinage (40) comprenant un premier axe linéaire (Z3), par le biais duquel la tête d'usinage peut être déplacée dans une direction parallèle à l'axe de rotation (C3) de la fixation de pièce (20), les axes de machine destinés au déplacement de la tête d'usinage (40) comprenant de préférence un second axe linéaire (X3), avec lequel la tête d'usinage peut être déplacée dans une direction perpendiculaire à l'axe de rotation (C3) de la fixation de pièce (20) et à l'axe de rotation (B3) du logement d'outil (10) et/ou les axes de machine destinés au déplacement de la tête d'usinage (40) comprenant de préférence un axe de pivotement (A3), par le biais duquel la tête d'usinage peut être pivotée sur un axe qui est perpendiculaire aux axes de rotation (B3, C3) du logement d'outil (10) et de la fixation de pièce (20).

11. Dispositif selon l'une des revendications précédentes, comprenant au moins une fraise à chanfreiner (11) reçue dans le logement d'outil, en particulier au moins une fraise ChamferCut reçue dans le logement d'outil.

12. Centre d'usinage pour le taillage d'engrenages, comprenant un dispositif (1) selon l'une des revendications précédentes, une machine à tailler les engrenages et un changeur de pièce (3), la machine à tailler les engrenages destinée à l'usinage de dentures intérieures étant de préférence une fraiseuse pour le taillage d'engrenages ou une mortaiseuse pour le taillage d'engrenages ou une machine à tailler les engrenages par développante, et/ou l'usinage de denture et le chanfreinage des pièces étant effectués parallèlement dans le temps de cycle et/ou le changeur de pièce (3) étant un système d'automatisation circulaire et le dispositif selon l'une des revendications précédentes et la machine à tailler les engrenages étant disposés dans différentes positions angulaires du système d'automatisation circulaire.

13. Procédé de chanfreinage d'au moins une arête de face de la denture d'une pièce à denture intérieure (21), en particulier par un dispositif selon l'une des revendications précédentes, par au moins une fraise à chanfreiner (11), en particulier une fraise ChamferCut, reçue dans un logement d'outil (10) monté rotatif,
**caractérisé en ce que**
le logement d'outil (10) est disposé à côté d'une pièce (21) reçue dans une fixation de pièce (20) et la fraise à chanfreiner (11) reçue dans le logement d'outil est disposée au moyen d'un mandrin d'outil (13) dans la zone de l'ouverture centrale formée par la denture intérieure pour être amenée en prise avec une arête de la denture sur la face supérieure et/ou la face inférieure de la pièce (21).

14. Procédé selon la revendication 13, dans lequel l'arête de la denture sur une première face frontale de la pièce est usinée par chanfreinage alors que la pièce est reçue dans une première fixation de pièce (20) et l'arête de la denture sur une seconde face frontale de la pièce est usinée par chanfreinage alors que la pièce est reçue dans une seconde fixation de pièce (30).

15. Utilisation d'une fraise à chanfreiner, en particulier d'une fraise ChamferCut, pour exécuter un procédé selon l'une des revendications 13 et/ou 14 et/ou dans un dispositif selon l'une des revendications 1 à 12.
